# EUROPÄISCHE PATENTSCHRIFT

(11) **EP 1 673 524 B1**
(45) Veröffentlichungstag und Bekanntmachung des Hinweises auf die Patenterteilung: **30.05.2007**
(21) Anmeldenummer: 04787216.3
(22) Anmeldetag: 27.09.2004
(51) Int. Cl.: F02B 29/08, F02D 41/22

(54) **VERFAHREN UND VORRICHTUNG ZUM ÜBERWACHEN EINES IMPULSLADEVENTILS EINER BRENNKRAFTMASCHINE**
METHOD AND DEVICE FOR MONITORING A PULSE CHARGING VALVE OF AN INTERNAL COMBUSTION ENGINE
PROCEDE ET DISPOSITIF POUR SURVEILLER UNE SOUPAPE DE CHARGE A IMPULSION D'UN MOTEUR A COMBUSTION INTERNE

(30) Priorität: 13.10.2003 DE 10347517
(43) Veröffentlichungstag der Anmeldung: 28.06.2006
(73) Patentinhaber: SIEMENS AKTIENGESELLSCHAFT, 80333 München (DE)
(72) Erfinder: KLINGSEIS, Bernhard, 93047 Regensburg (DE)
(86) Internationale Anmeldenummer: PCT/EP2004/052316
(87) Internationale Veröffentlichungsnummer: WO 2005/038211

(56) Entgegenhaltungen:
- EP-A- 0 521 545
- DE-A- 19 950 222
- US-A1- 2003 177 844
- PATENT ABSTRACTS OF JAPAN Bd. 0111, Nr. 55 (M-589), 20. Mai 1987 (1987-05-20) -& JP 61 286521 A (MAZDA MOTOR CORP), 17. Dezember 1986 (1986-12-17)

## Beschreibung

Die Erfindung betrifft ein Verfahren und eine Vorrichtung zum Überwachen eines Impulsladeventils einer Brennkraftmaschine, wobei das Impulsladeventil in einem Saugrohr angeordnet ist.

Aus der DE 102 00 533 A1 ist eine Brennkraftmaschine bekannt. Sie hat einen Sammler, von dem ein Saugrohr hin zu einem Einlass eines Zylinders der Brennkraftmaschine geführt ist. Ein Gaseinlassventil ist an dem Einlass des Zylinders angeordnet. Ein Impulsladeventil ist stromaufwärts des Gaseinlassventils in dem Saugrohr angeordnet. Abhängig von der Schaltstellung des Impulsladeventils gibt es das Saugrohr frei oder verschließt es. Ferner ist ein Einspritzventil vorgesehen, welches den Kraftstoff zumisst.

Aus der EP 521 545 A2 ist ein System zur Diagnose eines fehlerhaften Betriebs eines Sperrventils in einem Verbrennungsmotor bekannt. Das Sperrventil ist in einem Saugrohr angeordnet und verhindert einen Rückstrom von Luft und/oder Kraftstoff aus einem Brennraum des Verbrennungsmotors. Das System erfasst einen Druck in einem Ansaugtrakt stromaufwärts des Sperrventils und stromabwärts einer Drosselklappe. Das System zeigt einen fehlerhaften Betrieb des Sperrventils an, wenn eine anomale Fluktuation des erfassten Drucks auftritt. Die Diagnose wird vorzugsweise bei einem vorgegebenen Betriebszustand des Verbrennungsmotors durchgeführt. Dieser vorgegebene Betriebszustand ist der Leerlauf des Verbrennungsmotors bei geringem Ladedruck.

Die schnell schaltenden Impulsladeventile, die jedem Zylinder zugeordnet sind, werden während des ersten Abschnitts der Ansaugsequenz geschlossen, so dass sich ein hoher Unterdruck aufbauen kann. Nach zirka der Hälfte der Ansaugsequenz wird das Impulsladeventil - der schnell schaltende Querschnittschalter - schlagartig geöffnet, so dass der während des ersten Abschnitts der Ansaugsequenz erzeugte Unterdruck im Zylinder eine sehr hohe Einströmgeschwindigkeit des angesaugten Luft/Kraftstoff-Gemisches erzeugt. Die sehr schnell in den Brennraum des Zylinders der Brennkraftmaschine einströmende Einlassluftsäule führt in dem Bereich kleinerer und mittlerer Drehzahlen der Brennkraftmaschine zu deutlichen Aufladeeffekten aufgrund der besseren Füllungscharakteristik des jeweiligen Brennraums.

Ein Defekt des Impulsladeventils kann dazu führen, dass die tatsächlich während eines Ansaughubs eines Zylinders angesaugte Luftmasse geringer ist als bei ordnungsgemäß funktionierendem Impulsladeventil. Dies führt dann zu einer Veränderung des tatsächlichen Luft/Kraftstoff-Gemisches in dem Zylinder der Brennkraftmaschine, was dann gegebenenfalls eine Verschlechterung des Verbrennungsprozesses und erhöhte Schadstoffemissionen zur Folge haben kann.

Die Aufgabe der Erfindung ist es, ein Verfahren und eine Vorrichtung zum Überwachen eines Impulsladeventils in einer Brennkraftmaschine zu schaffen, das bzw. die einfach und zuverlässig ist.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren und eine entsprechende Vorrichtung zum Überwachen eines Impulsladeventils in einer Brennkraftmaschine mit einem Sammler, von dem ein Saugrohr hin zu einem Einlass eines Zylinders der Brennkraftmaschine geführt ist. Die Brennkraftmaschine hat ferner ein Gaseinlassventil, das an dem Einlass des Zylinders angeordnet ist. Das Impulsladeventil ist stromaufwärts des Gaseinlassventils in dem Saugrohr angeordnet und gibt abhängig von seiner Schaltstellung das Saugrohr frei oder verschließt es. Ein Drucksensor ist in dem Ansaugtrakt angeordnet und erfasst einen Saugrohrdruck.

Die Erfindung beruht auf der Erkenntnis, dass der Verlauf des von dem Drucksensor erfassten Saugrohrdrucks charakteristisch ist für einen möglichen Fehler des Impulsladeventils.

Die Erfindung nutzt diese Erkenntnis, indem der Verlauf des erfassten Saugrohrdrucks mit dem eines Referenz-Saugrohrdrucks verglichen wird, der charakteristisch ist für einen vorgegebenen Betriebszustand des Impulsladeventils. Abhängig von dem Vergleich wird auf einen Fehler des Impulsladeventils erkannt.

Es ist somit zum Überwachen des Impulsladeventils kein zusätzlicher Sensor notwendig, da ein Drucksensor in dem Ansaugtrakt sehr häufig ohnehin für andere Zwecke vorhanden ist. Das Überwachen ist somit ohne wesentliche zusätzliche Kosten möglich.

In einer vorteilhaften Ausgestaltung der Erfindung ist der Betriebszustand des Impulsladeventils das Hängen des Impulsladeventils in seiner Offenstellung, das Hängen des Impulsladeventils in seiner Schließstellung und/oder in freischwingender Mittelstellung. Diese Betriebszustände treten im Fehlerfall des Impulsladeventils auf und verursachen dann unerwünschte Schadstoffemissionen.

In einer weiteren vorteilhaften Ausgestaltung der Erfindung wird der Verlauf des erfassten Saugrohrdrucks mit dem eines Referenz-Saugrohrdrucks jeweils über ein Zylindersegment der Brennkraftmaschine verglichen. Dies ermöglicht auf einfache Weise eine direkte Zuordnung eines erkannten Fehlers zu einem bestimmten Zylinder der Brennkraftmaschine mit der Folge, dass von der Steuerung der Brennkraftmaschine gezielt für diesen Zylinder entsprechende Maßnahmen zur Reduktion der Schadstoffemissionen ergriffen werden können.

In einer vorteilhaften Ausgestaltung der Erfindung erfolgt der Vergleich anhand der Frequenzspektren des Verlaufs des erfassten Saugrohrdrucks und des Referenzsaugrohrdrucks. Dies hat den Vorteil, dass sehr einfach und äußerst präzise ein Erkennen des Betriebszustands des Impulsladeventils ermöglicht ist.

In einer weiteren vorteilhaften Ausgestaltung der Erfindung wird der oder die für einen Betriebszustand des Impulsladeventils charakteristischen Frequenzanteile miteinander verglichen. Dies hat den Vorteil, dass so sehr präzise der Betriebszustand des Impulsladeventils ermittelt werden kann bei gleichzeitig verringertem Rechenaufwand.

So ist es besonders vorteilhaft wenn für einen Betriebszustands des Hängens des Impulsladeventils in freischwingender Mittelstellung der Frequenzbereich der Eigenschwingung des Impulsladeventils verglichen wird. Die Eigenfrequenz des Impulsladeventils liegt in der Regel deutlich höher als die der regulären Druckschwingung in dem Saugrohr. Sie kann so einfach anhand des Frequenzspektrums des Verlaufs des erfassten Saugrohrdrucks erkannt werden und ist dann charakteristisch für das Hängen des Impulsladeventils in freischwingender Mittelstellung.

In einer weiteren vorteilhaften Ausgestaltung der Erfindung werden die Amplituden der Frequenzspektren verglichen. Dies ist besonders einfach.

In einer weiteren vorteilhaften Ausgestaltung der Erfindung erfolgt der Vergleich abhängig von der quadratischen Abweichung der Amplituden der Frequenzspektren. Dies hat den Vorteil, dass größere Abweichungen des Verlaufs des erfassten Saugrohrdrucks von dem des Referenzsaugrohrdrucks stärker gewichtet werden und so einfacher ein zuverlässiges Erkennen des Betriebszustands des Impulsladeventils gewährleistet ist.

In einer weiteren vorteilhaften Ausgestaltung der Erfindung erfolgt der Vergleich abhängig von der Drehzahl der Brennkraftmaschine. Dies hat den Vorteil, dass für die jeweilige Drehzahl charakteristische Verläufe des Referenzsaugrohrdrucks vorgesehen sein können und ferner bei einer digitalen Signalverarbeitung mit einer konstanten Abtastrate eine zuverlässigere Erkennung des jeweiligen Betriebszustands ermöglicht ist.

Ausführungsbeispiele der Erfindung werden im folgenden anhand der schematischen Zeichnungen erläutert. Es zeigen:
- Figur 1: eine Brennkraftmaschine mit einem Impulsladeventil 18 und einer Vorrichtung zum Überwachen des Impulsladeventils 18,
- Figur 2: ein Ablaufdiagramm eines Programms zum Überwachen des Impulsladeventils,
- Figuren 3 bis 6: Verläufe eines durch einen Drucksensor 16 erfassten Saugrohrdrucks bei verschiedenen Betriebszuständen des Impulsladeventils 18.

Elemente gleicher Konstruktion und Funktion sind figurenübergreifend mit den gleichen Bezugszeichen gekennzeichnet.

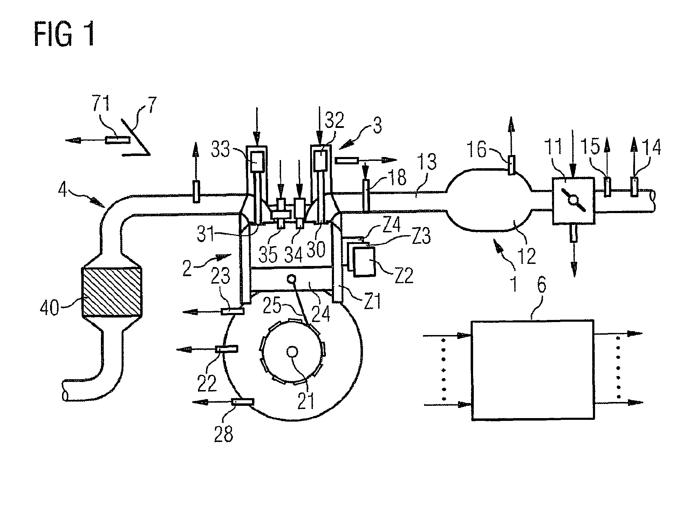

Eine Brennkraftmaschine (Figur 1) umfasst einen Ansaugtrakt 1, einen Motorblock 2, einen Zylinderkopf 3 und einen Abgastrakt 4. Der Ansaugtrakt 1 umfasst vorzugsweise eine Drosselklappe 11, ferner einen Sammler 12 und ein Saugrohr 13, das hin zu einem Zylinder Z1 über einen Einlasskanal in den Motorblock 2 geführt ist. Der Motorblock 2 umfasst ferner eine Kurbelwelle 21, welche über eine Pleuelstange 25 mit dem Kolben 24 des Zylinders Z1 gekoppelt ist.

Der Zylinderkopf 3 umfasst einen Ventiltrieb mit einem Einlassventil 30, einem Auslassventil 31 und Ventilantrieben 32, 33. Der Antrieb des Gaseinlassventils 30 und des Gasauslassventils 31 erfolgt bevorzugt mittels einer Nockenwelle.

Der Zylinderkopf 3 umfasst ferner ein Einspritzventil 34 und eine Zündkerze 35. Alternativ kann das Einspritzventil 34 auch in dem Ansaugkanal angeordnet sein.

Der Abgastrakt 4 umfasst einen Katalysator 40.

In dem Saugrohr 13 ist ferner ein Impulsladeventil 18 angeordnet, das in einer Schaltstellung, der Offenstellung, den Querschnitt des Saugrohrs 13 freigibt und in einer weiteren Schaltstellung , der Schließstellung, den Querschnitt des Saugrohrs 13 verschließt. Das Impulsladeventil 18 ist bevorzugt als Feder-Masse Schwinger ausgebildet und umfasst zwei beabstandet angeordnete Elektromagnete mit jeweils einer Spule und einem Kern. Das Ventilglied des Impulsladeventils 18 ist bevorzugt mit einem Anker gekoppelt, dessen Position abhängt von der Bestromung der Spulen. Sind beide Spulen unbestromt, so verharrt das Ventilglied in einer Mittelstellung, in der das Saugrohr teilweise freigegeben ist. Ist die erste Spule bestromt so kommt das Ventilglied in seine Schließstellung. Ist die zweite Spule bestromt, so kommt das Ventilglied in seine Offenstellung. Ist das Ventilglied in seiner Mittelstellung, so kann es zu Schwingungen durch die strömende Luft im Saugrohr angeregt werden. Diese Schwingungen haben dann die Frequenz der Eigenschwingung des Feder-Masse Schwingers.

Ferner ist eine Steuereinrichtung 6 vorgesehen, der Sensoren zugeordnet sind, die verschiedene Messgrößen erfassen und jeweils den Messwert der Messgröße ermitteln. Die Steuereinrichtung 6 ermittelt abhängig von mindestens einer der Messgrößen Stellgrößen, die dann in ein oder mehrere Stellsignale zum Steuern der Stellglieder mittels entsprechender Stellantriebe umgesetzt werden.

Die Sensoren sind ein Pedalstellungsgeber 71, welcher die Stellung eines Fahrpedals 7 erfasst, ein Luftmassenmesser 14, welcher einen Luftmassenstrom stromaufwärts der Drosselklappe 11 erfasst, ein Temperatursensor 15, welcher die Ansauglufttemperatur erfasst, ein Drucksensor 16, welcher den Saugrohrdruck erfasst, ein Kurbelwellenwinkelsensor 22, welcher einen Kurbelwellenwinkel erfasst, aus dem dann eine Drehzahl N ermittelt wird, ein weiterer Temperatursensor 23, welcher eine Kühlmitteltemperatur erfasst, und noch ein Temperatursensor 28, der eine Öltemperatur erfasst. Je nach Ausführungsform der Erfindung kann eine beliebige Untermenge der genannten Sensoren oder auch zusätzliche Sensoren vorhanden sein.

Die Stellglieder sind beispielsweise die Drosselklappe 11, die Gaseinlass- und Gasauslassventile 30, 31, das Einspritzventil 34, die Zündkerze 35, die Verstelleinrichtung 37 und das Impulsladeventil 18.

Neben dem Zylinder Z1 kann die Brennkraftmaschine auch noch weitere Zylinder Z2-Z4 umfassen, denen dann ebenfalls entsprechende Stellglieder zugeordnet sind.

Das Impulsladeventil 18 wird bevorzugt so angesteuert, dass es den Querschnitt des Saugrohres erst freigibt nachdem das Gaseinlassventil 30 geöffnet hat. Dadurch wird vor dem Öffnen des Impulsladeventils 18 durch die Ansaugbewegung des Kolbens 24 ein Unterdruck in dem Bereich des Saugrohrs zwischen dem Impulsladeventil 18 und dem Gaseinlassventil 13 erzeugt. Wenn das Impulsladeventil 18 anschließend in seine Offenstellung gesteuert wird, strömt in die in dem Saugrohr stromaufwärts des Impulsladeventils 18 befindliche Luft aufgrund des Druckgefälles mit sehr hoher Geschwindigkeit in den Brennraum des Zylinders Z1. Das Impulsladeventil wird dann gegebenenfalls zeitlich vor dem Gaseinlassventil 30 wieder in seine Schließstellung gesteuert, was bei geeigneter Ansteuerung zu einem Aufladeeffekt in dem Zylinder Z1 führt. Dieser Aufladeeffekt ist insbesondere bei niedrigeren Drehzahlen N stark ausgeprägt.

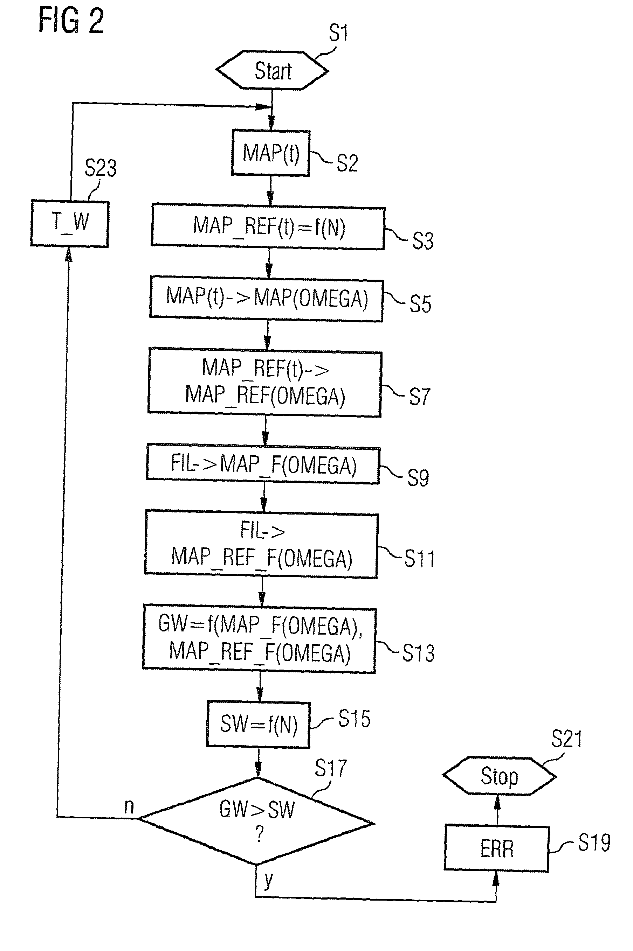

Die Steuereinrichtung 6 umfasst auch eine Vorrichtung zum Überwachen des Impulsladeventils 18. Ein Programm zum Überwachen des Impulsladeventils 18 wird in einem Schritt S1 (Figur 2) gestartet. In dem Schritt S1 werden gegebenenfalls Variablen initialisiert. Das Programm wird bevorzugt zeitnah zum Motorstart der Brennkraftmaschine gestartet.

In einem Schritt S2 wird zunächst der Verlauf MAP(t) des erfassten Saugrohrdrucks erfasst. Dies erfolgt bevorzugt über ein Zylindersegment der Brennkraftmaschine. Ein Zylindersegment der Brennkraftmaschine ist definiert als der Kurbelwellenwinkel eines Arbeitsspiels der Brennkraftmaschine dividiert durch die Anzahl der Zylinder der Brennkraftmaschine. Ein Zylindersegment beträgt bei einer Brennkraftmaschine mit vier Zylindern so beispielsweise 180° Kurbelwellenwinkel.

In einem Schritt S3 wird ein Verlauf MAP_REF(t) eines Referenz-Saugrohrdrucks eingelesen, der bevorzugt in einem Speicher der Steuereinrichtung 6 abgelegt ist. Bevorzugt wird der Verlauf MAP_REF(t) des Referenz-Saugrohrdrucks abhängig von der Drehzahl N ermittelt. Verläufe MAP_REF(t) des Referenz-Saugrohrdrucks sind bevorzugt durch Messungen an einem Motorprüfstand oder an einem Kraftfahrzeug, in dem die Brennkraftmaschine angeordnet ist, oder durch Simulationen ermittelt.

Der Verlauf MAP_REF(t) des Referenz-Saugrohrdrucks wird jeweils separat eingelesen für den jeweils zu untersuchenden Betriebszustand des Impulsladeventils 18. So wird jeweils der Verlauf MAP_REF(t) eingelesen, der charakteristisch ist für das Hängen in Offenstellung, für das Hängen in Schließstellung oder für die dauernde Mittelstellung des Impulsladeventils 18. Bevorzugt werden die folgenden Schritte jeweils im Hinblick auf alle diese Betriebszustände und gegebenenfalls im Hinblick auf einen Betriebszustand des Normalbetriebs jeweils durchlaufen, um exakt den aktuellen Betriebszustand des Impulsladeventils 18 zu ermitteln. Der Betriebszustand des Normalbetriebs ist der Betriebszustand, in dem das Impulsladeventil sich derart in seine Offenstellung und wieder in seine Schließstellung und wieder in seine Offenstellung bewegt, dass der gewünschte Aufladeeffekt in dem Brennraum des Zylinders Z1 erreicht wird.

In einem Schritt S5 wird der Verlauf MAP (t) des erfassten Saugrohrdrucks frequenztransformiert und es wird so das Frequenzspektrum MAP(OMEGA) des erfassten Saugrohrdrucks erhalten.

In einem Schritt S7 wird der Verlauf MAP_REF(t) des Referenz-Saugrohrdrucks ebenfalls frequenztransformiert und es wird so das Frequenzspektrum MAP_REF (OMEGA) erhalten. Alternativ kann das Frequenzspektrum MAP_REF (OMEGA) des Referenz-Saugrohrdrucks auch direkt in dem Speicher der Steuereinrichtung 6 abgelegt sein.

In einem Schritt S9 wird das Frequenzspektrum MAP(OMEGA) des erfassten Saugrohrdrucks gefiltert. Das Filter ist so ausgelegt, dass die für den aktuell untersuchten Betriebszustand nicht charakteristischen Frequenzanteile herausgefiltert werden. So werden beispielsweise bei einer Untersuchung hinsichtlich des Betriebszustands des Verharrens in Mittelstellung des Impulsladeventils 18 bevorzugt alle Frequenzanteile außer denen, die in dem Bereich der Eigenfrequenz des Feder-Masseschwingers liegen, herausgefiltert. Durch diese Filterung wird dann im Schritt S9 ein gefiltertes Frequenzspektrum MAP_F (OMEGA) des erfassten Saugrohrdrucks erhalten.

In einem Schritt S11 wird das Frequenzspektrum MAP_REF (OMEGA) des Referenz-Saugrohrdrucks entsprechend dem Schritt S9 gefiltert und es wird so ein gefiltertes Referenzspektrum MAP_REF_F(OMEGA) erhalten. Alternativ kann in dem Speicher der Steuereinrichtung auch bereits dieses gefilterte Frequenzspektrum MAP_REF_F(OMEGA) abgelegt sein und dann eingelesen werden.

In einem Schritt S13 wird ein Gütewert GW abhängig von den gefilterten Frequenzspektren MAP_F (OMEGA), MAP_REF_F (OMEGA) des erfassten Saugrohrdrucks und des Referenz-Saugrohrdrucks ermittelt. Bevorzugt erfolgt dies abhängig von der quadratischen Abweichung der Amplituden der gefilterten Frequenzspektren MAP_F (OMEGA), MAP_REF_F (OMEGA). Dies hat den Vorteil, dass dann größere Abweichungen stärker als kleinere Abweichungen zwischen den Amplituden gewichtet werden.

In einem Schritt S15 wird ein Schwellenwert SW abhängig von der Drehzahl N ermittelt.

In einem Schritt S17 wird anschließend geprüft, ob der Gütewert GW größer ist als der Schwellenwert SW. Ist dies nicht der Fall, so verharrt das Programm für eine vorgegebene Wartezeitdauer T_W in dem Schritt 523. Alternativ kann das Programm in dem Schritt S23 auch für einen vorgegebenen Kurbelwellenwinkel in dem Schritt S23 verharren. Die Verweilzeit in dem Schritt S23 ist vorteilhaft so gewählt, dass die Schritte S2 bis S17 jeweils einmal pro Zylindersegment der Brennkraftmaschine durchlaufen werden.

Ist in dem Schritt S17 hingegen der Gütewert GW größer als der Schwellenwert SW, so wird in einem Schritt S19 auf einen Fehlerzustand ERR erkannt. Dies kann dann zum Beispiel der Betriebszustand des Hängens des Impulsladeventils 18 in seiner Mittelstellung, des Hängens des Impulsladeventils 18 in seiner Schließstellung oder seiner Offenstellung sein.

Wenn das Verfahren pro Zylindersegment der Brennkraftmaschine einmal durchgeführt wird, so kann der Fehler auch zylinderindividuell zugeordnet werden, dass heißt dem jeweiligen dem aktuellen Zylinder Z1 bis Z4 zugeordneten Impulsladeventil 18 zugeordnet werden.

In dem Schritt S19 können dann auch entsprechende Notlaufmaßnahmen ergriffen werden. Diese können beispielsweise eine veränderte Zumessung von Kraftstoff durch die Einspritzventile 34 sein oder auch ein Begrenzen der Drehzahl N auf einen maximalen Wert. Das Programm wird dann in einem Schritt S21 beendet.

Alternativ zu dem beschriebenen Vorgehen anhand der Figur 2 kann der Gütewert GW auch abhängig von dem zeitlichen Verlauf MAP(t) des erfassten Saugrohrdrucks und dem zeitlichen Verlauf MAP_REF(t) des Referenz-Saugrohrdrucks ermittelt werden.

Außerdem kann der Gütewert GW auch mittels einer anderen geeigneten Funktion als der quadratischen Abweichung ermittelt werden, die ein Maß darstellt für die Abweichung zwischen zwei Verläufen.

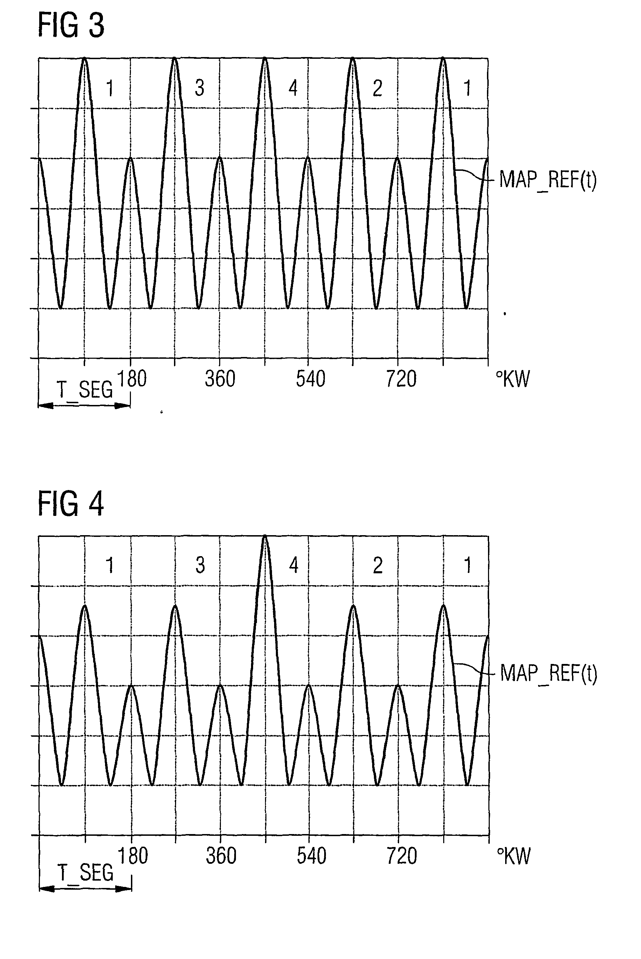

In den Figuren 3, 4, 5 und 6 sind die zeitlichen Verläufe MAP_REF (t) des Saugrohrdrucks über den Kurbelwellenwinkel KW für verschiedene Betriebszustände des Impulsladeventils 18 dargestellt. Die Zeitdauer eines Zylindersegments ist mit T_SEG gekennzeichnet. Ferner sind in den Figuren 3-6 jeweils die Zylinder Z1-Z4 bezeichnet, die sich während des aktuellen Zylindersegments gerade in dem Ansaugtakt befinden.

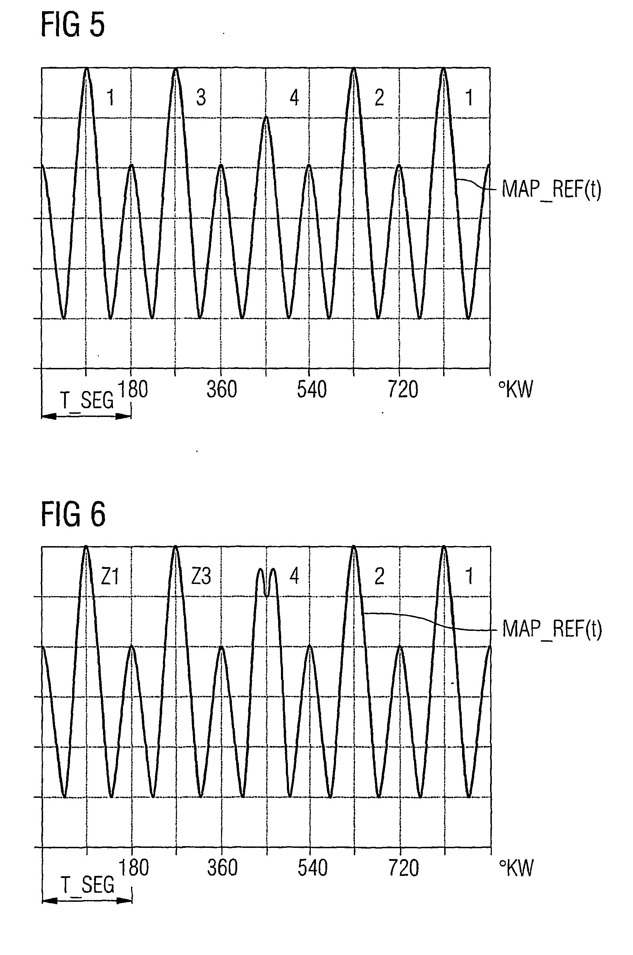

Figur 3 zeigt den Verlauf MAP_REF (t) des Referenz-Saugrohrdrucks für den Betriebszustands des Normalbetriebs des Impulsladeventils 18. Figur 4 zeigt den Verlauf MAP_REF (t) des Referenz-Saugrohrdrucks für einen Betriebszustand des Hängens des Impulsladeventils 18 in Offenstellung. Figur 5 zeigt den zeitlichen Verlauf MAP_REF (t) des Saugrohrdrucks für den Betriebszustand des Hängens in Schließstellung des Impulsladeventils 18. Figur 6 zeigt den Verlauf MAP_REF (t) des Saugrohrdrucks für den Betriebszustand des Hängens und somit Freischwingens in Mittelstellung des Impulsladeventils 18.

## Patentansprüche

1. Verfahren zum Überwachen eines Impulsladeventils (18) einer Brennkraftmaschine mit
- einem Sammler (12), von dem ein Saugrohr (13) hin zu einem Einlass eines Zylinders (Z1 bis Z4) der Brennkraftmaschine geführt ist,
- einem Gaseinlassventil (30), das an dem Einlass des Zylinders (Z1 bis Z4) angeordnet ist,
- dem Impulsladeventil (18), das stromaufwärts des Gaseinlassventils (30) in dem Saugrohr (13) angeordnet ist und abhängig von seiner Schaltstellung das Saugrohr (13) freigibt oder verschließt, und
- einem Drucksensor (16), der in dem Ansaugtrakt (1) angeordnet ist und einen Saugrohrdruck erfasst,
**dadurch gekennzeichnet,**
- **dass** der Verlauf (MAP (t)) des erfassten Saugrohrdrucks mit dem eines Referenz-Saugrohrdrucks verglichen wird, der charakteristisch ist für einen vorgegebenen Betriebszustand des Impulsladeventils (18) und
- **dass** abhängig von dem Vergleich auf einen Fehler des Impulsladeventils erkannt wird.

2. Verfahren nach Anspruch 1,
**dadurch gekennzeichnet, dass**
der Betriebszustand das Hängen des Impulsladeventils (18) in seiner Offenstellung, das Hängen des Impulsladeventils (18) in seiner Schließstellung und/oder in freischwingender Mittelstellung ist.

3. Verfahren nach einem der vorstehenden Ansprüche,
**dadurch gekennzeichnet, dass**
der Verlauf (MAP (t)) des erfassten Saugrohrdrucks mit dem eines Referenz-Saugrohrdrucks jeweils über ein Zylindersegment der Brennkraftmaschine verglichen wird.

4. Verfahren nach einem der vorstehenden Ansprüche,
**dadurch gekennzeichnet, dass**
der Vergleich anhand der Frequenzspektren (MAP(OMEGA), MAP_REF (OMEGA)) des Verlaufs des erfassten Saugrohrdrucks und des Referenz-Saugrohrdrucks erfolgt.

5. Verfahren nach Anspruch 4,
**dadurch gekennzeichnet, dass**
der oder die für einen Betriebszustand des Impulsladeventils (18) charakteristischen Frequenzanteile miteinander verglichen werden.

6. Verfahren nach Anspruch 5,
**dadurch gekennzeichnet, dass**
für einen Betriebszustand des Hängens des Impulsladeventils (18) in freischwingender Mittelstellung der Frequenzbereich der Eigenschwingung des Impulsladeventils (18) verglichen wird.

7. Verfahren nach einem der Ansprüche 4 bis 6,
**dadurch gekennzeichnet, dass**
die Amplituden der Frequenzspektren verglichen werden.

8. Verfahren nach Anspruch 7,
**dadurch gekennzeichnet, dass**
der Vergleich abhängig von der quadratischen Abweichung der Amplituden der Frequenzspektren erfolgt.

9. Verfahren nach einem der vorstehenden Ansprüche,
**dadurch gekennzeichnet, dass**
der Vergleich abhängig von der Drehzahl (N) der Brennkraftmaschine erfolgt.

10. Vorrichtung zum Überwachen eines Impulsladeventils (18) einer Brennkraftmaschine mit
- einem Sammler (12), von dem ein Saugrohr (13) hin zu einem Einlass eines Zylinders (Z1 bis Z4) der Brennkraftmaschine geführt ist,
- einem Gaseinlassventil (30), das an dem Einlass des Zylinders (Z1 bis Z4) angeordnet ist,
- dem Impulsladeventil (18), das stromaufwärts des Gaseinlassventils (30) in dem Saugrohr (13) angeordnet ist und abhängig von seiner Schaltstellung das Saugrohr (13) freigibt oder verschließt, und
- einem Drucksensor (16), der in dem Ansaugtrakt (1) angeordnet ist und einen Saugrohrdruck erfasst,
**dadurch gekennzeichnet,**
- **dass** erste Mittel vorgesehen sind, die den Verlauf (MAP(t)) des erfassten Saugrohrdrucks mit dem eines Referenz-Saugrohrdrucks vergleichen, der charakteristisch ist für einen vorgegebenen Betriebszustands des Impulsladeventils (18) und
- **dass** zweite Mittel vorgesehen sind, die abhängig von dem Vergleich auf einen Fehler des Impulsladeventils (18) erkennen.

## Claims

1. Method for monitoring a pulse charging valve (18) of an internal combustion engine comprising
- a manifold (12) from which an induction pipe (13) leads to an inlet of a cylinder (Z1 to Z4) of the internal combustion engine,
- a gas inlet valve (30) which is positioned at the inlet of the cylinder (Z1 to Z4),
- the pulse charging valve (18) which is positioned in the induction pipe (13) upstream of the gas inlet valve (30) and either opens or closes the induction pipe (13) as a function of its switching position, and
- a pressure sensor (16) which is positioned in the air induction tract (1) and measures an induction pipe pressure,
**characterised in that**
- the curve (MAP(t)) of the measured induction pipe pressure is compared with that of a reference induction pipe pressure which is characteristic of a predetermined operating state of the pulse charging valve (18) and
- a fault of the pulse charging valve is detected as a function of the result of the comparison.

2. Method according to claim 1,
**characterised in that**
the operating state is the hanging of the pulse charging valve (18) in its open position, the hanging of the pulse charging valve (18) in its closed position and/or the hanging of the pulse charging valve (18) in a freely oscillating middle position.

3. Method according to one of the preceding claims,
**characterised in that**
the curve (MAP(t)) of the measured induction pipe pressure is compared with that of a reference induction pipe pressure in each case over a cylinder segment of the internal combustion engine.

4. Method according to one of the preceding claims,
**characterised in that**
the comparison is performed on the basis of the frequency spectra (MAP(OMEGA), MAP_REF(OMEGA)) of the curve of the measured induction pipe pressure and the reference induction pipe pressure.

5. Method according to claim 4,
**characterised in that**
the frequency components that are characteristic of an operating state of the pulse charging valve (18) are compared with one another.

6. Method according to claim 5,
**characterised in that**
the frequency range of the natural oscillation of the pulse charging valve (18) is compared for an operating state in which the pulse charging valve (18) hangs in a freely oscillating middle position.

7. Method according to one of claims 4 to 6,
**characterised in that**
the amplitudes of the frequency spectra are compared.

8. Method according to claim 7,
**characterised in that**
the comparison is performed as a function of the quadratic deviation of the amplitudes of the frequency spectra.

9. Method according to one of the preceding claims,
**characterised in that**
the comparison is performed as a function of the rotational speed (N) of the internal combustion engine.

10. Device for monitoring a pulse charging valve (18) of an internal combustion engine comprising
- a manifold (12) from which an induction pipe (13) leads to an inlet of a cylinder (Z1 to Z4) of the internal combustion engine,
- a gas inlet valve (30) which is positioned at the inlet of the cylinder (Z1 to Z4),
- the pulse charging valve (18) which is positioned in the induction pipe (13) upstream of the gas inlet valve (30) and either opens or closes the induction pipe (13) as a function of its switching position, and
- a pressure sensor (16) which is positioned in the air induction tract (1) and measures an induction pipe pressure,
**characterised in that**
- first means are provided which compare the curve (MAP(t)) of the measured induction pipe pressure with that of a reference induction pipe pressure which is characteristic of a predetermined operating state of the pulse charging valve (18) and
- second means are provided which detect a fault of the pulse charging valve (18) as a function of the result of the comparison.

## Revendications

1. Procédé pour la surveillance d'une valve de suralimentation à impulsion (18) d'un moteur à combustion interne comprenant
- un collecteur (12) à partir duquel un tuyau d'admission (13) va jusqu'à l'ouverture d'admission d'un cylindre (Z1 à Z4) du moteur à combustion interne,
- une soupape d'admission (30), qui est disposée sur l'ouverture d'admission du cylindre (Z1 à Z4),
- la valve de suralimentation à impulsion (18), qui est disposée en amont de la soupape d'admission (30) dans le tuyau d'admission (13) et qui, selon sa position, libère l'accès au tuyau d'admission (13) ou le ferme, et
- un capteur de pression (16), qui est disposé dans le tuyau d'admission (1) et capte la pression d'admission,
**caractérisé en ce que**,
- la courbe (MAP(t)) de la pression du tuyau d'admission captée est comparée avec celle d'un tuyau d'admission de référence qui est caractéristique pour un état de fonctionnement donné de la valve de suralimentation à impulsion (18) et
- en fonction de la comparaison un défaut de la valve de suralimentation à impulsion est identifié.

2. Procédé selon la revendication 1,
**caractérisé en ce que**,
l'état de fonctionnement correspond au blocage de la valve de suralimentation à impulsion (18) dans sa position ouverte, au blocage de la valve de suralimentation à impulsion (18) dans sa position fermée et/ou d'oscillation libre dans sa position intermédiaire.

3. Procédé selon l'une quelconque des revendications précédentes,
**caractérisé en ce que**,
la courbe (MAP(t)) de la pression captée dans le tuyau d'admission est comparée à celle d'un tuyau d'admission de référence sur un segment de cylindre du moteur à combustion interne.

4. Procédé selon l'une quelconque des revendications précédentes,
**caractérisé en ce que**,
la comparaison est effectuée à l'aide des spectres des fréquences (MAP(OMEGA)) et (MAP_REF (OMEGA)) des courbes de la pression captée dans le tuyau d'admission et de celle du tuyau d'admission de référence.

5. Procédé selon la revendication 4,
**caractérisé en ce que**,
la ou les parties de fréquence caractéristiques d'un état de fonctionnement de la valve de suralimentation à impulsion (18) sont comparées entre elles.

6. Procédé selon la revendication 5,
**caractérisé en ce que**,
pour un état de fonctionnement correspondant au blocage de la valve de suralimentation à impulsion (18) en oscillation libre dans la position intermédiaire on compare la plage de fréquence de la fréquence caractéristique de la valve de suralimentation à impulsion (18).

7. Procédé selon l'une quelconque des revendications 4 à 6,
**caractérisé en ce que**,
on compare les amplitudes des spectres des fréquences.

8. Procédé selon la revendication 7,
**caractérisé en ce que**,
la comparaison est exécutée en fonction de l'écart quadratique des amplitudes des spectres des fréquences.

9. Procédé selon l'une quelconque des revendications précédentes,
**caractérisé en ce que**,
la comparaison est exécutée en fonction de la vitesse de rotation (N) du moteur à combustion interne.

10. Dispositif pour la surveillance d'une valve de suralimentation à impulsion (18) d'un moteur à combustion interne comprenant
- un collecteur (12) à partir duquel un tuyau d'admission (13) va jusqu'à l'ouverture d'admission d'un cylindre (Z1 à Z4) du moteur à combustion interne,
- une soupape d'admission (30), qui est disposée sur l'ouverture d'admission du cylindre (Z1 à Z4),
- la valve de suralimentation à impulsion (18), qui est disposée en amont de la soupape d'admission (30) dans le tuyau d'admission (13) et qui, selon sa position, libère l'accès au tuyau d'admission (13) ou le ferme, et
- un capteur de pression (16), qui est disposé dans le tuyau d'admission (1) et capte la pression d'admission,
**caractérisé en ce que**,
- de premiers moyens sont prévus pour comparer la courbe (MAP(t)) de la pression captée sur le tuyau d'admission avec celle d'un tuyau d'admission de référence qui est caractéristique pour un état de fonctionnement donné de la valve de suralimentation à impulsion (18) et
- de seconds moyens sont prévus pour identifier un défaut de la valve de suralimentation à impulsion (18) en fonction de la comparaison.
